# EUROPEAN PATENT APPLICATION

(11) **EP 4 604 226 A1**
(43) Date of publication of application: **20.08.2025**
(21) Application number: 23954055.2
(22) Date of filing: 19.12.2023
(51) Int. Cl.: H01M 10/04, G06Q 10/0631, G06Q 50/04, H01M 50/204

(54) **BATTERY MANUFACTURING METHOD AND SYSTEM**

(30) Priority: 28.09.2023 CN 202311268643
(71) Applicant: Contemporary Amperex Technology (Hong Kong) Limited, Central (HK)
(72) Inventor: WU, Kai, Ningde, Fujian 352100 (CN); LIN, Jia, Ningde, Fujian 352100 (CN); QIU, Shiping, Ningde, Fujian 352100 (CN); LUO, Jian, Ningde, Fujian 352100 (CN); LIU, Yang, Ningde, Fujian 352100 (CN)
(74) Representative: Ran, Handong
(86) International application number: PCT/CN2023/139935
(87) International publication number: WO 2025/065923

(57) **Abstract**

Embodiments of this application provide a battery manufacturing method and system. The battery manufacturing method is applied to the battery manufacturing system. The battery manufacturing system includes a controller and production equipment. The battery manufacturing method includes: during product production by production equipment in any process of a battery production line, obtaining, by the controller, product information, where the production equipment is an equipment corresponding to any process in a battery group production line; and in a case that the product information meets a product switching condition, controlling, by the controller, the production equipment to switch to producing a new-model product. **In** this way, model switching efficiency of the entire battery production line can be improved.

## Description

### CROSS-REFERENCE TO RELATED APPLICATIONS

This application claims priority to Chinese Patent Application No. 202311268643.X, filed on September 28, 2023 and entitled "BATTERY MANUFACTURING METHOD AND SYSTEM", which is incorporated herein by reference in its entirety.

### TECHNICAL FIELD

This application relates to the field of battery technologies, and in particular, to a battery manufacturing method and system.

### BACKGROUND

New energy batteries are increasingly widely applied in life and industries. For example, new energy vehicles equipped with batteries have been widely used. In addition, batteries are increasingly applied in the field of energy storage or the like.

Traditional battery group flexible manufacturing lines are generally customized professionally, and their functions are very purposeful. When a production line needs to be adjusted for producing a product, it is necessary to clear the entire production line, remove and replace materials, change equipment fixtures and carriers, recalibrate key points of robotic arms, and so on. Moreover, an entire model switching process needs to be completed with the production line shut down.

In the related art, after all stations in a battery group flexible manufacturing line complete production of original-model products, the stations start to switch fixtures to produce new products. However, this process leads to a long tool switching time, resulting in low model switching efficiency.

### SUMMARY

Embodiments of this application provide a battery manufacturing method and system to improve model switching efficiency of an entire battery production line.

The technical solutions of this application are implemented as follows:
An embodiment of this application provides a battery manufacturing method, applied to a battery manufacturing system. The battery manufacturing system includes a controller and production equipment. The method includes:
during product production by production equipment in any process of a battery production line, obtaining, by the controller, product information, where the production equipment is an equipment corresponding to any process in a battery group production line; and
in a case that the product information meets a product switching condition, controlling, by the controller, the production equipment in any process to switch to producing a new-model product.

In the foregoing solution, the obtaining, by the controller, product information during product production by production equipment in any process of a battery production line includes:
during product production by production equipment in a first process of the battery production line, performing, by the production equipment in the first process, a station entry/exit check to obtain a non-duplicate statistical quantity of products produced by the production equipment in the first process; and
transmitting, by the production equipment in the first process, the non-duplicate statistical quantity of products to the controller.

Understandably, during production by the production equipment in the first process of the battery production line, the production equipment in the first process performs the station entry/exit check to obtain the non-duplicate statistical quantity of products produced by the production equipment in the first process, so as to facilitate subsequent updating of a work order demand quantity and improve model switching efficiency of the production line.

In the foregoing solution, the obtaining, by the controller, product information during product production by production equipment in any process of a battery production line includes:
during product production by production equipment in a second process of the battery production line, obtaining, by the controller, a model information code of a product corresponding to the second process.

Understandably, during production by the production equipment in the second process of the battery production line, the model information code of the product is obtained, to facilitate subsequent switching of the battery production line based on the model information code of the product and improve model switching efficiency of the production line.

In the foregoing solution, the battery production line includes a battery pack production line and a battery module production line; the first process includes at least one of cell feeding and module insulation testing in the battery module production line, or lower box loading, lower box gluing, automatic module boxing, module tightening, busbar welding, upper cover tightening, air tightness testing, electrical performance testing, and module packaging and unloading in the battery pack production line; the battery manufacturing system further includes production control equipment; and the method further includes:
delivering, by the production control equipment, a work order demand quantity of the first process; and
the controlling, by the controller, the production equipment in any process to switch to producing a new-model product in a case that the product information meets a product switching condition includes:
   under a condition that the statistical quantity from the production equipment in the first process is consistent with the work order demand quantity, triggering, by the controller, a product switching request to the production control equipment;
   delivering, by the production control equipment, product information of a new model to the controller in response to the product switching request; and
   controlling, by the controller based on the product information of the new model, the production equipment in the first process to switch a fixture, so that the production equipment in the first process switches to producing the new-model product.

Understandably, when the statistical quantity from the production equipment in the first process is consistent with the work order demand quantity, the product switching request is triggered to the production control equipment; the product information of the new model delivered by the production control equipment based on the product switching request is received; and based on the product information of the new model, the current production equipment is controlled to switch the fixture, so that the production equipment in the first process switches to producing the new-model product. In this process, because the production equipment in the first process does not wait for downstream production equipment to complete subsequent production, but directly switches to producing the new-model product, model switching efficiency of the entire battery production line can be improved.

In the foregoing solution, the production equipment includes a first tray, and an electronic tag is attached to the first tray; a second process includes at least one of cell side adhesive bonding, cell large surface adhesive bonding, cell pre-stacking, and cell pressurization and assembly in the battery module production line; and the method further includes:
writing, by the controller, the product information of the new model into the electronic tag of the first tray, where the first tray is a tray that first reaches the first process after the production equipment in the first process switches the fixture; and
in a case that the first tray reaches the second process downstream of the first process, obtaining, by the controller, a model information code of a product during production by production equipment in the second process.

Understandably, the product information of the new model is written into the electronic tag of the first tray; and in the case that the first tray reaches the second process downstream of the production equipment in the first process, the model information code of the product is obtained during production by the production equipment in the second process. Therefore, switching of the battery production line can be subsequently determined based on the model information code of the product, and model switching efficiency of the entire battery production line can be improved.

In the foregoing solution, the production equipment further includes a sensor; and the obtaining, by the controller, a model information code of a product includes:
reading, by the sensor, an electronic tag of a current tray that reaches the production equipment in the second process, or reading the electronic tag of the first tray that reaches the production equipment in the second process, to obtain the model information code of the product; and
transmitting, by the production equipment in the second process, the model information code of the product to the controller.

Understandably, the sensor reads the electronic tag of the current tray that reaches the production equipment in the second process, or reads the electronic tag of the first tray, to obtain the model information code of the product. Therefore, switching of the battery production line can be subsequently determined based on the model information code of the product, and model switching efficiency of the entire battery production line can be improved.

In the foregoing solution, the controlling, by the controller, the production equipment in any process to switch to producing a new-model product in a case that the product information meets a product switching condition includes:
under a condition that the model information code of the product is inconsistent with a historical model information code, controlling, by the controller, the production equipment in the second process to switch a fixture, so that the second process switches to producing the new-model product.

Understandably, in a case that the model information code of the product is inconsistent with the historical model information code, the production equipment in the second process is controlled to switch the fixture, so that the production equipment in the second process switches to producing the new-model product. Because the production equipment in the second process does not wait for downstream production equipment to complete subsequent production, but directly switches to producing the new-model product, model switching efficiency of the entire battery production line can be improved

In the foregoing solution, the method further includes:
during product production by the production equipment in the first process of the battery production line, performing, by the production equipment in the first process, a station entry/exit check to determine a quantity of defective products in the first process and a quantity of refurbished products in the first process;
sending the quantity of defective products in the first process to the production control equipment;
determining, by the production control equipment, an updated work order demand quantity based on the quantity of defective products in the first process, a quantity of defective products in a downstream process, the quantity of refurbished products in the first process, a quantity of refurbished products in the downstream process, and the work order demand quantity of the first process;
transmitting the updated work order demand quantity to the controller; and
determining, by the controller, whether the updated work order demand quantity and the product information meet the product switching condition, and controlling the production equipment in the first process to switch to producing the new-model product.

Understandably, during production by the production equipment in the first process of the production process, the production equipment in the first process performs the station entry/exit check to determine the quantity of defective products in the first process and the quantity of refurbished products in the first process; the updated work order demand quantity determined by the production control equipment based on the quantity of defective products in the first process, the quantity of defective products in the downstream process, the quantity of refurbished products in the first process, the quantity of refurbished products in the downstream process, and the work order demand quantity of the production equipment in the first process is received; and based on whether the updated work order demand quantity and the product information meet the product switching condition, the production equipment in the first process is controlled to switch to producing the new-model product. Because the production equipment in the first process does not wait for downstream production equipment to complete subsequent production, but directly switches to producing the new-model product, model switching efficiency of the entire battery production line can be improved.

In the foregoing solution, the determining, by the production control equipment, an updated work order demand quantity based on the quantity of defective products in the first process, a quantity of defective products in a downstream process, the quantity of refurbished products in the first process, a quantity of refurbished products in the downstream process, and the work order demand quantity of the first process includes:
receiving, by the production control equipment, the quantity of defective products in the downstream process and the quantity of refurbished products in the downstream process that are sent by the controller; and
determining, by the production control equipment, the updated work order demand quantity of the first process based on the work order demand quantity of the first process, the quantity of defective products in the first process, the quantity of defective products in the downstream process, the quantity of refurbished products in the first process, and the quantity of refurbished products in the downstream process.

Understandably, the quantity of defective products in the first process, the quantity of refurbished products in the first process, the quantity of defective products in the downstream process, and the quantity of refurbished products in the downstream process that are sent by the controller are received; and the updated work order demand quantity of the production equipment in the first process is determined based on the work order demand quantity of the first process, the quantity of defective products in the first process, the quantity of defective products in the downstream process, the quantity of refurbished products in the first process, and the quantity of refurbished products in the downstream process. The updated work order demand quantity of the production equipment in the first process is sent to the controller, so that the controller controls, based on whether the product information meets a product switching condition related to the updated work order demand quantity of the production equipment in the first process, the production equipment in the first process to switch to producing the new-model product, so as to improve model switching efficiency of the entire battery production line.

In the foregoing solution, the determining, by the production control equipment, the updated work order demand quantity of the first process based on the work order demand quantity of the first process, the quantity of defective products in the first process, the quantity of defective products in the downstream process, the quantity of refurbished products in the first process, and the quantity of refurbished products in the downstream process includes:
performing, by the production control equipment, a summation operation on the work order demand quantity of the first process, the quantity of defective products in the first process, and the quantity of defective products in the downstream process to obtain an operation result; and
performing, by the production control equipment, a subtraction operation on the operation result, the quantity of refurbished products in the first process, and the quantity of refurbished products in the downstream process to determine the updated work order demand quantity of the first process.

Understandably, the summation operation is performed on the work order demand quantity of the production equipment in the first process, the quantity of defective products in the first process, and the quantity of defective products in the downstream process to obtain the operation result; and the subtraction operation is performed on the operation result, the quantity of refurbished products in the first process, and the quantity of refurbished products in the downstream process to determine the updated work order demand quantity. Therefore, the quantity of produced products can be accurately determined, and resources can be saved.

An embodiment of this application provides a battery manufacturing system. The battery manufacturing system includes at least one controller, at least one piece of production equipment, and production control equipment; the production equipment is an equipment corresponding to any process in a battery group production line;
each controller is connected to each piece of production equipment, where a quantity of controllers and a quantity of production equipment are both consistent with a quantity of processes;
the at least one controller is connected to the production control equipment;
the at least one piece of production equipment is configured to produce, by using provided materials, products in respective processes of the battery group based on an original product model delivered by a corresponding controller;
the production control equipment is configured to deliver product information to the controller; and
during product production by production equipment in any process of a battery production line, the at least one controller is configured to control the production equipment in any process to switch to producing a new-model product in a case that the product information meets a product switching condition.

An embodiment of this application provides a battery manufacturing method. The battery manufacturing method is applied to a battery manufacturing system. The battery manufacturing system includes a controller and production equipment. The method includes: during product production by production equipment in any process of a battery production line, obtaining, by the controller, product information, where the production equipment is an equipment corresponding to any process in a battery group production line; and in a case that the product information meets a product switching condition, controlling, by the controller, the production equipment in any process to switch to producing a new-model product. In the foregoing solution, because the production equipment in any process of the battery production line starts to switch to producing the new-model product in the case that the product information meets the product switching condition, waste of materials of in-process parts caused by model switching can be reduced. In addition, because the production equipment in any process does not wait for downstream production equipment to complete subsequent production, but directly switches to producing the new-model product in the case that the product information meets the product switching condition, a tool switching time of production equipment in each process can be reduced. Therefore, model switching efficiency of the entire battery production line can be improved.

### BRIEF DESCRIPTION OF DRAWINGS

The accompanying drawings herein are incorporated into the specification and constitute a part of the specification. The accompanying drawings show embodiments in accordance with this application and are used together with the specification to describe the technical solutions of this application. Apparently, the accompanying drawings in the following description merely show some embodiments of this application, and persons of ordinary skill in the art can derive other accompanying drawings from these accompanying drawings without creative efforts.

The flowcharts shown in the accompanying drawings are only examples for description, and do not necessarily include all content and operations or steps, and execution is not necessarily in the described order. For example, some operations or steps may also be decomposed, while some operations or steps may be combined or partially combined. Therefore, an actual execution order may be changed based on an actual condition.
FIG. 1 is an optional schematic flowchart of a battery manufacturing method according to the related art;
FIG. 2 is a first optional schematic flowchart of a battery manufacturing method according to an embodiment of this application;
FIG. 3 is an optional schematic flowchart of a battery manufacturing method for a production line according to an embodiment of this application;
FIG. 4 is a schematic diagram of a module process according to an embodiment of this application;
FIG. 5 is a second optional schematic flowchart of a battery manufacturing method according to an embodiment of this application;
FIG. 6 is a schematic diagram of a battery pack process according to an embodiment of this application;
FIG. 7 is a flowchart of an exemplary battery manufacturing method according to an embodiment of this application; and
FIG. 8 is a schematic diagram of a structure of a battery manufacturing system according to an embodiment of this application.

### DESCRIPTION OF EMBODIMENTS

To make the objectives, technical solutions, and advantages of the embodiments of this application clearer, the following further describes the specific technical solutions of this application in detail with reference to the accompanying drawings in the embodiments of this application. The following embodiments are used to describe this application, but are not intended to limit the scope of this application.

Unless otherwise defined, all technical and scientific terms used in this application shall have the same meanings as commonly understood by those skilled in the art to which this application pertains. In addition, the terms used in this application are merely intended to describe the embodiments of this application but not intended to constitute any limitation on this application.

Currently, new energy batteries are increasingly widely applied in life and industries. New energy batteries are not only applied in energy storage power supply systems such as hydroelectric power plants, thermal power plants, wind power plants, and solar power plants, but also widely applied in many fields including electric transportation tools such as electric bicycles, electric motorcycles, and electric vehicles, and aerospace. With continuous expansion of application fields of traction batteries, market demand for the traction batteries is also continuously increasing.

In an embodiment of this application, a battery may be a battery cell (sometimes also referred to as a cell), or a battery may be a battery module or battery pack including a plurality of battery cells. The battery cell is a basic unit capable of converting chemical energy and electrical energy mutually. The battery cell can be used to produce a battery module or battery pack to supply power to an electrical apparatus. The battery cell may be a secondary battery. The secondary battery is a battery cell that can be charged after being discharged, to activate active materials for continuous use. The battery cell may be a lithium-ion battery, a sodium-ion battery, a sodium lithium-ion battery, a lithium metal battery, a sodium metal battery, a lithium-sulfur battery, a magnesium-ion battery, a nickel-metal-hydride battery, a nickel-cadmium battery, a lead-acid battery, or the like. This is not specifically limited in the embodiments of this application.

Terms such as "some embodiments", "this embodiment", and "embodiments of this application", and examples mentioned in the following description describe a subset of all possible embodiments. However, understandably, "some embodiments" may represent the same subset or different subsets of all possible embodiments, and these embodiments may be combined with each other without conflict.

If terms "first" and "second" or similar descriptions appear in the application document, the following explanation is added: In the following description, the terms "first", "second", and "third" are merely used to distinguish between similar objects and do not represent a specific order of objects. Understandably, if permitted, "first", "second", and "third" are interchangeable in their specific order or sequence, so that the embodiments of this application described herein can be implemented in an order other than that illustrated or described herein.

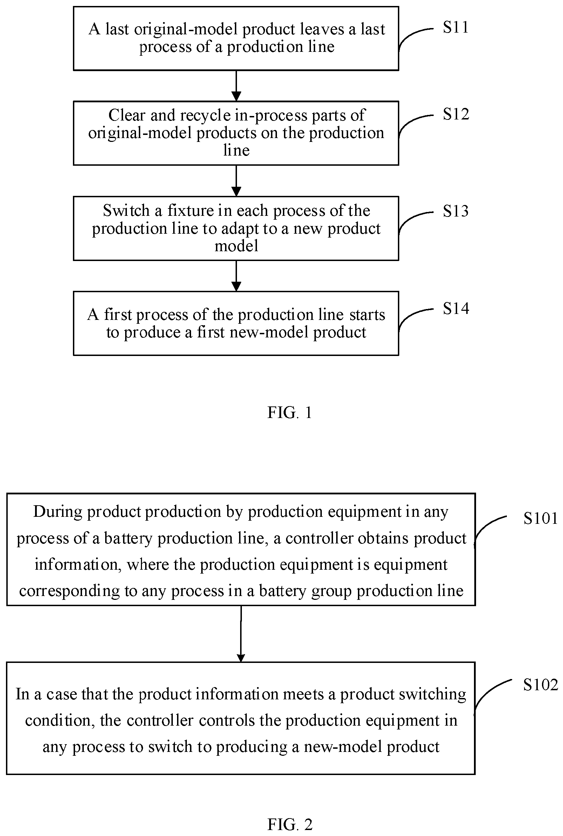

An embodiment of this application provides a battery manufacturing method. FIG. 1 is an optional schematic flowchart of a battery manufacturing method according to the related art. As shown in FIG. 1, a conventional procedure for switching an entire battery group production line includes S11 to S14.

S11. A last original-model product leaves a last process of a production line.

S12. Clear and recycle in-process parts of original-model products on the production line.

S13. Switch a fixture in each process of the production line to adapt to a new product model.

S14. A first process of the production line starts to produce a first new-model product.

The conventional switching solution for the battery production line is likely to lead to a long switching time and waste of materials of the in-process parts of the original-model products.

An embodiment of this application provides a battery manufacturing method. FIG. 2 is a first optional schematic flowchart of a battery manufacturing method according to an embodiment of this application. The method is described with reference to steps shown in FIG. 2.

S101. During product production by production equipment in any process of a battery production line, a controller obtains product information, where the production equipment is an equipment corresponding to any process in a battery group production line.

In some embodiments of this application, the battery production line is a battery group flexible manufacturing production line; the battery production line includes a battery pack production line and a battery module production line; and the battery production line includes a plurality of pieces of production equipment. In these embodiments of this application, a process corresponding to production equipment belongs to an assembly section or a pack section. The battery module production line is the assembly section. The battery pack production line is the pack section and also a pack production line.

In some embodiments of this application, production equipment in the pack section has a station entry/exit check function, that is, a counting function. Only first production equipment and last production equipment in the assembly section have the counting function.

In some embodiments of this application, the production equipment in the pack section and the production equipment in the assembly section are all controlled by corresponding controllers to produce products, and the controllers may be programmable logic controllers (Programmable Logic Controller, PLC), or may be upper computers or intermediate computers. The programmable logic controller is a digital operation electronic system specially designed for application in an industrial environment. The programmable logic controller uses a programmable memory to store instructions for performing operations such as logical operations, sequence control, timing, counting, and arithmetic operations. Various types of mechanical equipment or production processes are controlled through digital or analog input and output.

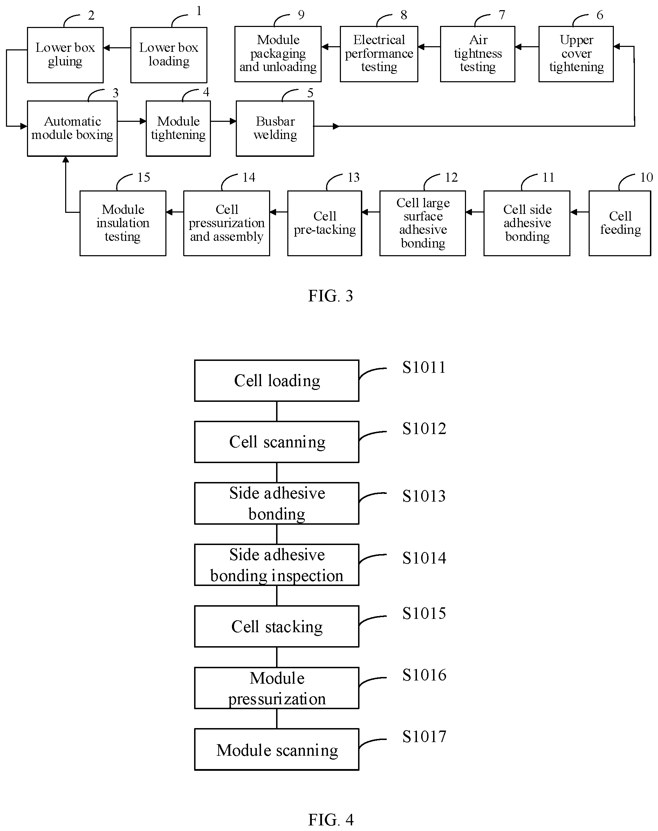

In some embodiments of this application, FIG. 3 is an optional schematic flowchart of a battery manufacturing method for a production line according to an embodiment of this application. As shown in FIG. 3, processes corresponding to a plurality of pieces of production equipment belong to an assembly section (also referred to as a module section) and a battery pack section (that is, a pack section). A process of the pack section (which may also become a battery pack process) includes lower box loading 1, lower box gluing 2, automatic module boxing 3, module tightening 4, busbar welding 5, upper cover tightening 6, air tightness testing 7, electrical performance testing 8, and module packaging and unloading 9. A process of the assembly section (which may also become a module process) includes cell feeding 10, cell side adhesive bonding 11, cell large surface adhesive bonding 12, cell pre-stacking 13, cell pressurization and assembly 14, and module insulation testing 15. Lower box loading 1, lower box gluing 2, automatic module boxing 3, module tightening 4, busbar welding 5, upper cover tightening 6, air tightness testing 7, electrical performance testing 8, module packaging and unloading 9, cell feeding 10, and module insulation testing 15 are all interactions between the controller and production control equipment, controlling switching of production to a new-model product. Cell side adhesive bonding 11, cell large surface adhesive bonding 12, cell pre-stacking 13, and cell pressurization and assembly 14 are all controlled by the controller to switch production to the new-model product.

The production line targeted by these embodiments of this application may be a battery production line for producing batteries. The battery production line includes a module production line. The module production line may include the following production equipment: cell loading, cell side adhesive bonding, cell large surface adhesive bonding, cell pre-stacking, cell pressurization and assembly, and module insulation testing. In addition, the battery production line may further include a controller and production control equipment (Manufacturing Execution System, MES), where the PLC is communicatively connected to the MES, or the PLC may be communicatively connected to the MES through an upper computer and configured to switch a production module work order. The MES system is a production information management system oriented to an execution layer of a workshop of a manufacturing enterprise. The MES may provide the enterprise with management modules, including: manufacturing data management, plan arrangement management, production scheduling management, inventory management, quality management, human resources management, work center/equipment management, tool and fixture management, procurement management, cost management, project Kanban management, production process control, underlying data integration and analysis, and upper-layer data integration and decomposition, thereby creating a solid, reliable, comprehensive, and feasible manufacturing collaboration management platform.

FIG. 4 is a schematic diagram of a module process according to an embodiment of this application. As shown in FIG. 4, the module process may sequentially include the following:
S1011. Cell loading.

Cell loading is a first station of the module section.

S1012. Cell scanning.

A quantity A of conforming cells loaded onto the production line can be obtained from this process.

S1013. Side adhesive bonding.

S1014. Side adhesive bonding inspection.

A quantity B of nonconforming cells inspected can be obtained from this process.

S1015. Cell stacking.

S1016. Module pressurization.

A quantity C of nonconforming modules during module pressurization can be obtained from this process.

S1017. Module scanning.

Module scanning is a termination station of the module section.

Cell loading equipment loads cells onto the production line, cell scanning equipment scans the cells, side adhesive bonding equipment applies adhesive to sides of the cells, cell stacking equipment stacks the cells, module pressurization equipment performs pressurization on modules, and module scanning equipment scans the modules.

It should be noted that a module in this embodiment of this application may be a square-shell battery cell module, a cylindrical battery cell module, or a pouch cell module. This is not specifically limited in the embodiments of this application.

In some embodiments of this application, controllers corresponding to the production equipment in the pack section can all communicate with the production control equipment. In the assembly section, only a controller corresponding to production equipment in a first process (cell feeding) and a controller corresponding to production equipment in a last process (module insulation testing) can communicate with the production control equipment.

In some embodiments of this application, during product production by production equipment in any process of the battery production line, the production equipment obtains product information, and then the production equipment sends the product information to the controller.

In these embodiments of this application, the product information may include a non-duplicate statistical quantity of products and a model information code of a product. This is not limited in the embodiments of this application.

In some embodiments of this application, during product production by production equipment in a first process of the battery production line, the production equipment in the first process performs a station entry/exit check to obtain a non-duplicate statistical quantity of products produced by the production equipment in the first process; and the production equipment in the first process transmits the non-duplicate statistical quantity of products to the controller.

In some embodiments of this application, during product production by production equipment in a second process of the battery production line, the controller obtains a model information code of a product corresponding to the second process.

In some embodiments of this application, during product production by the production equipment in the second process of the battery production line, the production equipment in the second process obtains the model information code of the product corresponding to the second process; and the production equipment in the second process transmits the model information code of the product to the controller.

It should be noted that the first process includes at least one of cell feeding and module insulation testing in the battery module production line, or lower box loading, lower box gluing, automatic module boxing, module tightening, busbar welding, upper cover tightening, air tightness testing, electrical performance testing, and module packaging and unloading in the battery pack production line; and the second process includes at least one of cell side adhesive bonding, cell large surface adhesive bonding, cell pre-stacking, and cell pressurization and assembly in the battery module production line.

In these embodiments of this application, the first process may be a process with a counting function or a check function; and the second process is a process without a counting function or a check function.

S102. In a case that the product information meets a product switching condition, the controller controls the production equipment in any process to switch to producing a new-model product.

In some embodiments of this application, the process corresponding to the production equipment being the first process means that the production equipment has the counting function. Based on whether the statistical quantity from the production equipment in the first process reaches a work order demand quantity, it may be determined whether the controller controls the production equipment in the first process to switch to producing the new-model product.

In some embodiments of this application, under a condition that the statistical quantity from the production equipment in the first process is consistent with the work order demand quantity, the controller triggers a product switching request to the production control equipment; the production control equipment delivers product information of a new model to the controller in response to the product switching request; and the controller controls, based on the product information of the new model, the production equipment in the first process to switch a fixture, so that the production equipment in the first process switches to producing the new-model product.

It should be noted that not all processes have fixtures. Therefore, a manner in which the controller controls switching of different processes to produce the new-model product is not limited in the embodiments of this application.

In some embodiments of this application, the process corresponding to the production equipment being the second process means that the production equipment in the second process does not have the counting function, and the controller may determine, based on the model information code of the product, whether to switch to producing the new-model product.

In some embodiments of this application, under a condition that the model information code of the product is inconsistent with a historical model information code, the controller controls the production equipment in the second process to switch a fixture, so that the production equipment in the second process switches to producing the new-model product.

It should be noted that the production equipment in the first process may be first production equipment, and the production equipment in the second process may be second production equipment. Therefore, controllers may include a first controller and a second controller. The first controller corresponds to the first production equipment that controls the first process, and the second controller corresponds to the second production equipment that controls the second process. The controllers may be in a one-to-one correspondence with the production equipment.

It can be understood that because the production equipment in any process of the battery production line starts to switch to producing the new-model product in the case that the product information meets the product switching condition, waste of materials of in-process parts caused by model switching can be reduced. In addition, because the production equipment in any process does not wait for downstream production equipment to complete subsequent production, but directly switches to producing the new-model product in the case that the product information meets the product switching condition, a tool switching time of production equipment in each process can be reduced. Therefore, model switching efficiency of the entire battery production line can be improved.

In some embodiments of this application, during execution of the first process, this application further performs S103 as follows:
S103. The production control equipment delivers a work order demand quantity of the first process.

In some embodiments of this application, the controller may receive the work order demand quantity of the first process that is delivered by the production control equipment.

In some embodiments of this application, a work order is information related to manufacturing of a product, determined before the product is produced.

In some embodiments of this application, the work order demand quantity is determined based on an actual product demand quantity.

In some embodiments of this application, the work order demand quantity is manually confirmed, then delivered to the production control equipment, and subsequently forwarded to the controller by the production control equipment.

For example, under a condition that the first process is cell feeding in the battery module production line, the controllers may be a lower computer and an upper computer, where the lower computer is connected to the production equipment in the first process, and the lower computer communicates with the production control equipment through the upper computer.

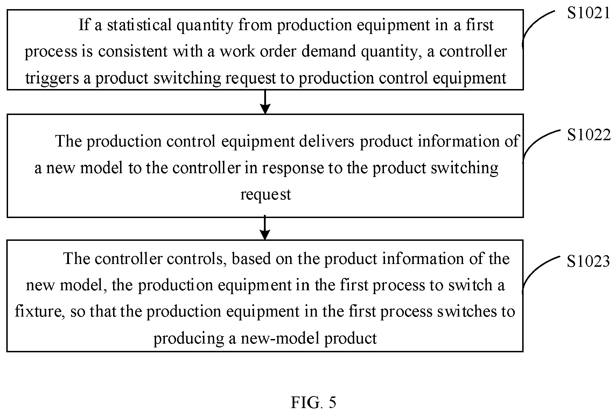

In some embodiments of this application, based on S103, FIG. 5 is a second optional schematic flowchart of a battery manufacturing method according to an embodiment of this application. As shown in FIG. 5, S102 includes S1021 to S1023 as follows:
S1021. Under a condition that the statistical quantity from the production equipment in the first process is consistent with the work order demand quantity, the controller triggers a product switching request to the production control equipment.

In some embodiments of this application, the controller compares the statistical quantity from the production equipment in the first process with the work order demand quantity. The statistical quantity from the production equipment in the first process being consistent with the work order demand quantity indicates that the production equipment in the first process has completed production of current-model products, and the controller triggers the product switching request to the production control equipment.

In some embodiments of this application, the statistical quantity from the production equipment in the first process is obtained by using the check function of the production equipment in the first process. During production station entry/exit, an information code of a product is obtained, and non-duplicate counting is performed to obtain the statistical quantity from the production equipment in the first process.

It should be noted that the statistical quantity from the production equipment in the first process is a statistical quantity of conforming products.

S1022. The production control equipment delivers product information of a new model to the controller in response to the product switching request.

In some embodiments of this application, the production control equipment determines the product information of the new model in response to the product switching request, and the production control equipment delivers the product information of the new model to the controller.

In some embodiments of this application, the product information of the new model includes a specification and size of the new-model product, the type of a required fixture, and the like.

S1023. The controller controls, based on the product information of the new model, the production equipment in the first process to switch the fixture, so that the production equipment in the first process switches to producing the new-model product.

In some embodiments of this application, the controller controls, based on the product information of the new model, the production equipment in the first process to switch the fixture, so that the production equipment in the first process switches to producing the new-model product.

It should be noted that production of products of different models requires different fixtures. Before production of the new-model product, the production equipment in the first process needs to be able to switch production to the corresponding fixture.

Understandably, when the statistical quantity from the production equipment in the first process is consistent with the work order demand quantity, the product switching request is triggered to the production control equipment; the product information of the new model delivered by the production control equipment based on the product switching request is received; and based on the product information of the new model, the current production equipment is controlled to switch the fixture, so that the production equipment in the first process switches to producing the new-model product. In this process, because the production equipment in the first process does not wait for downstream production equipment to complete subsequent production, but directly switches to producing the new-model product, model switching efficiency of the entire battery production line can be improved.

In some embodiments of this application, the production equipment includes a first tray, and an electronic tag is attached to the first tray; the second process includes at least one of cell side adhesive bonding, cell large surface adhesive bonding, cell pre-stacking, and cell pressurization and assembly in the battery module production line; and the battery manufacturing method provided in these embodiments of this application further performs S104 and S105 as follows:
S104. The controller writes the product information of the new model into the electronic tag of the first tray, where the first tray is a tray that first reaches the production equipment in the first process after the production equipment in the first process switches the fixture.

In some embodiments of this application, the controller writes the product information of the new model into the electronic tag of the first tray, so that when the first tray reaches the second process downstream of the first process, the production equipment in the second process can determine, based on the electronic tag of the first tray, whether to perform model switching of the production line.

It should be noted that the first tray is the tray that first reaches the first process after the production equipment in the first process switches the fixture.

S105. In a case that the first tray reaches the second process downstream of the first process, the controller obtains a model information code of a product during production by production equipment in the second process.

In some embodiments of this application, in the case that the first tray reaches the second process downstream of the first process, the controller obtains the model information code of the product during production by the production equipment in the second process.

It should be noted that the model information code of the product affects whether to switch the fixture.

Understandably, the controller writes the product information of the new model into the electronic tag of the first tray; and in the case that the first tray reaches the production equipment downstream of the current production equipment, the controller obtains the model information code of the product during production by the downstream production equipment in the production process, to subsequently determine, based on the model information code of the product, whether to switch the battery production line.

In some embodiments of this application, the production equipment further includes a sensor.

In some embodiments of this application, the sensor reads an electronic tag of a current tray that reaches the production equipment in the second process, or reads the electronic tag of the first tray that reaches the production equipment in the second process, to obtain the model information code of the product; and the production equipment in the second process transmits the model information code of the product to the controller.

In some embodiments of this application, the sensor reads the electronic tag of the current tray that reaches the production equipment in the second process; and the production equipment in the second process transmits the model information code of the product to the controller.

In some embodiments of this application, the sensor reads the electronic tag of the first tray that reaches the production equipment in the second process; and the production equipment in the second process transmits the model information code of the product to the controller.

Understandably, the controller obtains the model information code of the product, to subsequently determine, based on the model information code of the product, whether to switch the battery production line.

In some embodiments of this application, S 102 further includes S 1024 as follows: S 1024. Under a condition that the model information code of the product is inconsistent with a historical model information code, the controller controls the production equipment in the second process to switch a fixture, so that the production equipment in the second process switches to producing the new-model product.

In some embodiments of this application, the historical model information code is a model information code of a historical product, obtained by the controller from the tray or directly obtained from the production control equipment.

In some embodiments of this application, the controller compares the model information code of the product with the historical model information code. The model information code of the product being inconsistent with the historical model information code indicates that the new-model product needs to be produced, and the production equipment in the second process is controlled to switch the fixture, so that the production equipment in the second process switches to producing the new-model product.

In some embodiments of this application, after the controller obtains the model information code of the product, the controller compares the model information code of the product with the historical model information code, and in a case that the model information code of the product is inconsistent with the historical model information code, controls the production equipment in the second process to switch the fixture, so that the production equipment in the second process switches to producing the new-model product.

Understandably, when the model information code of the product is inconsistent with the historical model information code, the controller controls the production equipment in the second process to switch the fixture, so that the production equipment in the second process switches to producing the new-model product. Because the production equipment in the second process does not wait for downstream production equipment to complete subsequent production, but directly switches to producing the new-model product, model switching efficiency of the entire battery production line can be improved

In some embodiments of this application, for the first process, the battery manufacturing method provided in these embodiments of this application further includes S 106 to S1010 as follows:
S106. During product production by the production equipment in the first process of the battery production line, the production equipment in the first process performs a station entry/exit check to determine a quantity of defective products in the first process and a quantity of refurbished products in the first process.

In some embodiments of this application, during product production by the production equipment in the first process of the battery production line, the production equipment in the first process performs the station entry/exit check to determine the quantity of defective products in the first process.

In some embodiments of this application, during product production by the production equipment in the first process of the battery production line, the production equipment in the first process performs the station entry/exit check to determine the quantity of refurbished products in the first process.

In some embodiments of this application, the quantity of refurbished products is a quantity of conforming products obtained after nonconforming products initially checked are removed from the production equipment in the first process and repaired.

It should be noted that the quantity of defective products refers to the quantity of nonconforming products; and the quantity of refurbished products refers to the quantity of conforming products obtained after the defective products are repaired.

S107. Send the quantity of defective products in the first process to the production control equipment.

In some embodiments of this application, the controller may send the quantity of defective products in the first process to the production control equipment.

In some embodiments of this application, the controller sends the quantity of defective products in the first process to the production control equipment, so that the work order demand quantity is subsequently updated.

S108. The production control equipment determines an updated work order demand quantity based on the quantity of defective products in the first process, a quantity of defective products in a downstream process, the quantity of refurbished products in the first process, a quantity of refurbished products in the downstream process, and the work order demand quantity of the first process.

In some embodiments of this application, the production control equipment receives the quantity of defective products in the downstream process and the quantity of refurbished products in the downstream process that are sent by the controller; and the production control equipment determines the updated work order demand quantity of the first process based on the work order demand quantity of the first process, the quantity of defective products in the first process, the quantity of defective products in the downstream process, the quantity of refurbished products in the first process, and the quantity of refurbished products in the downstream process.

In some embodiments of this application, the production control equipment performs a summation operation on the work order demand quantity of the first process, the quantity of defective products in the first process, and the quantity of defective products in the downstream process to obtain an operation result, and performs a subtraction operation on the operation result, the quantity of refurbished products in the first process, and the quantity of refurbished products in the downstream process to determine the updated work order demand quantity of the first process.

In some embodiments of this application, the production control equipment performs the summation operation on the work order demand quantity of the first process, the quantity of defective products in the first process, and the quantity of defective products in the downstream process to obtain the operation result; and the production control equipment performs the subtraction operation on the operation result, the quantity of refurbished products in the first process, and the quantity of refurbished products in the downstream process to determine the updated work order demand quantity.

Understandably, the production control equipment performs the summation operation on the work order demand quantity of the first process, the quantity of defective products in the first process, and the quantity of defective products in the downstream process to obtain the operation result, and performs the subtraction operation on the operation result, the quantity of refurbished products in the first process, and the quantity of refurbished products in the downstream process to determine the updated work order demand quantity. Therefore, the quantity of produced products can be accurately determined, and material resources can be saved.

In some embodiments of this application, the updated work order demand quantity is adjusted based on a real-time quantity of conforming products produced, to ensure the work order demand quantity for producing products that conform to quality standards.

S109. The production control equipment transmits the updated work order demand quantity to the controller.

S1010. The controller determines whether the updated work order demand quantity and the product information meet the product switching condition, and controls the production equipment in the first process to switch to producing the new-model product.

In some embodiments of this application, the product switching condition may be whether the statistical quantity from the production equipment in the first process meets the updated work order demand quantity; or whether the obtained information code of the product is consistent with the information code of the historical product.

In some embodiments of this application, the controller may determine whether the updated work order demand quantity and the product information meet the product switching condition, and control the production equipment in the first process to switch to producing the new-model product.

It should be noted that the product switching condition may be whether the statistical quantity from the production equipment in the first process is consistent with the updated work order demand quantity.

In some embodiments of this application, after obtaining the updated work order demand quantity, the production equipment in the first process may determine whether the updated work order demand quantity is zero. The updated work order demand quantity being not zero indicates that the production equipment in the first process has not completed all tasks, and therefore, no switching of the fixture is needed in this case; or the updated work order demand quantity being zero indicates that the production equipment in the first process has completed all tasks, and therefore, switching of the fixture is needed in this case, so that the production equipment in the first process can switch to producing the new-model produce.

Understandably, during production by the production equipment in the first process of the production process, the production equipment in the first process performs the station entry/exit check to determine the quantity of defective products of the production equipment in the first process and the quantity of refurbished products of the production equipment in the first process; the controller receives the updated work order demand quantity determined by the production control equipment based on the quantity of defective products of the production equipment in the first process, the quantity of defective products in the downstream process, the quantity of refurbished products of the production equipment in the first process, the quantity of refurbished products in the downstream process, and the work order demand quantity of the production equipment in the first process; and based on whether the updated work order demand quantity and the product information meet the product switching condition, the controller controls the production equipment in the first process to switch to producing the new-model product. Because the production equipment in the first process does not wait for the downstream process to complete subsequent production, but directly switches to producing the new-model product, model switching efficiency of the entire battery production line can be improved.

For example, the battery production line targeted by the embodiments of this application may alternatively be a battery pack production line for producing a battery pack. In this case, for the battery pack production line, production equipment of the battery pack (PACK) production line may include: lower box loading equipment, water cooling flange installation equipment, balance valve installation equipment, lower box gluing equipment, gluing inspection equipment, module boxing equipment, module pre-tightening equipment, module tightening equipment, pole addressing equipment, ceramic coating separator (Ceramic Coating Separator, CCS) installation equipment, laser (BSB) welding equipment, post-welding inspection equipment, insulation film attachment equipment, SBOX installation equipment, low-voltage wiring harness installation equipment, high-voltage module installation equipment, SBOX upper cover installation equipment, strapping equipment, sealing pad installation equipment, upper cover tightening equipment, air tightness testing equipment, end-of-line (End of Life, EOL) testing equipment, DC resistance (DCR) testing equipment, appearance inspection equipment, and weighing and unloading equipment. In the foregoing production equipment, equipment that needs to switch the production module work order may include: three pieces of module boxing equipment, one piece of pole addressing equipment, one piece of CCS installation equipment, one piece of BSB welding equipment, one piece of lower box gluing equipment, one piece of weighing and unloading equipment, one piece of SBOX installation equipment, one piece of air tightness testing equipment, one piece of EOL testing equipment, and one piece of DCR testing equipment. In addition, the battery pack production line may further include: production control equipment (MES) for interacting with the foregoing equipment that needs to switch the production module work order, to implement switching of the production module work order.

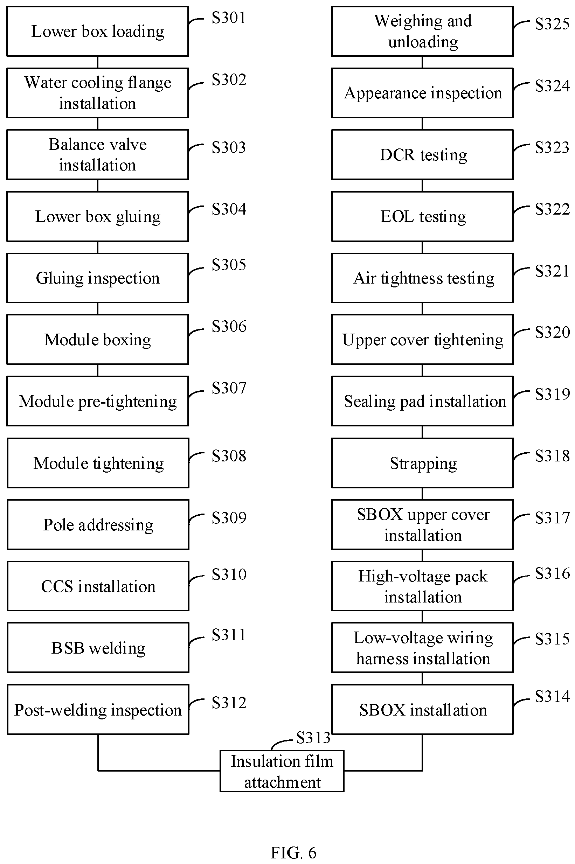

FIG. 6 is a schematic diagram of a battery pack process according to an embodiment of this application. As shown in FIG. 6, the battery pack (PACK) process may sequentially include the following:
S301. Lower box loading.

As first station equipment in the pack section, the lower box loading equipment mainly loads a lower box onto the production line.

S302. Water cooling flange installation.

Herein, after the lower box is obtained, a water cooling flange is installed for the lower box by using the water cooling flange installation equipment.

S303. Balance valve installation.

After the water cooling flange is installed for the lower box, a balance valve is installed for the lower box by using the balance valve installation equipment.

S304. Lower box gluing

After the balance valve is installed for the lower box, the lower box is glued by using the lower box gluing equipment.

S305. Gluing inspection,

After the lower box is glued, gluing of the lower box is inspected by using the gluing inspection equipment.

S306. Module boxing.

Herein, after gluing of the lower box is inspected, a module is placed in the lower box by using the module boxing equipment.

S307. Module pre-tightening.

After the module is placed in the lower box, the lower box with the module placed is pre-tightened by using the module pre-tightening equipment.

S308. Module tightening.

After the module pre-tightening process, the lower box is tightened by using the module tightening equipment.

S309. Pole addressing.

After the module tightening process, pole addressing is performed for the lower box by using the pole addressing equipment.

S310. CCS installation.

After the pole addressing process, a CCS is installed for the lower box by using the CCS installation equipment.

S311. BSB welding.

After the CCS installation process, BSB welding is performed for the lower box by using the BSB welding equipment.

S312. Post-welding inspection.

Herein, after BSB welding, post-welding inspection is performed for the lower box by using the post-welding inspection equipment.

S313. Insulation film attachment.

After the post-welding inspection process, an insulation film is attached to the lower box by using the insulation film attachment equipment.

S314. SBOX installation.

After the insulation film attachment process, an SBOX is installed for the lower box by using the SBOX installation equipment.

S315. Low-voltage wiring harness installation.

After the SBOX installation process, a low-voltage wiring harness is installed for the lower box by using the low-voltage wiring harness installation equipment.

S316. High-voltage pack installation.

Herein, after the low-voltage wiring harness installation process, a high-voltage pack is installed for the lower box by using the high-voltage pack installation equipment.

S317. SBOX upper cover installation.

After the high-voltage pack is installed, an SBOX upper cover is installed for the lower box by using the SBOX upper cover installation equipment.

S318. Strapping.

Herein, after the SBOX upper cover installation process, the lower box is strapped by using the strapping equipment.

S319. Sealing pad installation.

After the strapping process, a sealing pad is installed for the lower box by using the sealing pad installation equipment.

S320. Upper cover tightening.

After the sealing pad installation process, the upper cover of the lower box is tightened by using the upper cover tightening equipment.

S321. Air tightness testing.

Herein, after the upper cover tightening process, air tightness testing is performed for the lower box by using the air tightness testing equipment.

S322. EOL testing.

After the air tightness testing, EOL testing is performed for the lower box by using the EOL testing equipment.

S323. DCR testing.

After the EOL testing process, DCR testing is performed for the lower box by using the DCR testing equipment.

S324. Appearance inspection.

After the DCR testing process, appearance testing is performed for the lower box by using the appearance inspection equipment. A product that passes appearance testing may be referred to as a battery pack.

S325. Weighing and unloading.

The last process of the pack section is weighing and unloading. The battery pack is weighed and unloaded from the production line by using the weighing and unloading equipment. In this way, all processes of the entire pack section are completed, and the battery pack is obtained.

It should be noted that the pack in these embodiments of this application may be referred to as a battery pack or a battery box.

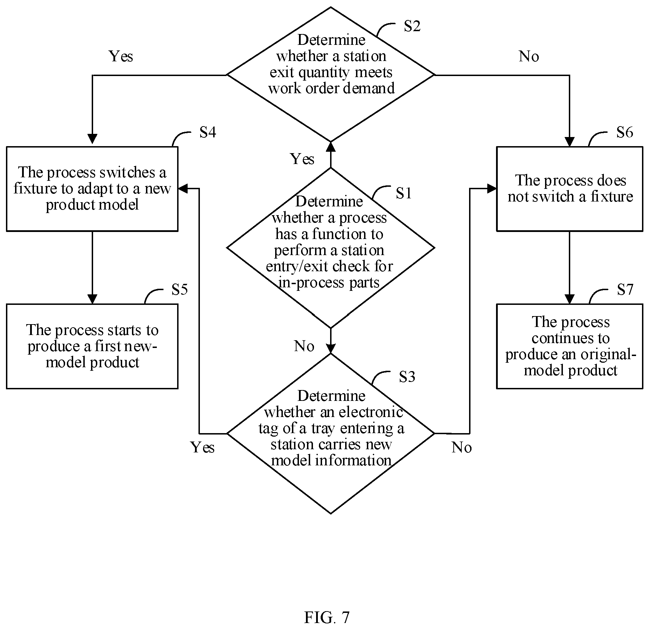

In some embodiments of this application, FIG. 7 is a flowchart of an exemplary battery manufacturing method according to an embodiment of this application. As shown in FIG. 7, steps are as follows:
S1. Determine whether a process has a function to perform a station entry/exit check for in-process parts.

In some embodiments of this application, the process corresponds to production equipment.

In some embodiments of this application, it is determined whether the process has the function to perform the station entry/exit check for the in-process parts. If yes, S2 is performed; otherwise, S3 is performed.

S2. Determine whether a station exit quantity meets work order demand.

In some embodiments of this application, the station exit quantity is a statistical quantity from production equipment in a first process; and the work order demand is a work order demand quantity.

In some embodiments of this application, it is determined whether the station exit quantity meets the work order demand. If yes, S4 is performed; otherwise, S6 is performed.

S3. Determine whether an electronic tag of a tray entering a station carries new model information.

In some embodiments of this application, the new model information is equivalent to product information of a new model.

In some embodiments of this application, it is determined whether the electronic tag of the tray entering the station carries the new model information. If yes, S4 is performed; otherwise, S6 is performed.

It should be noted that the product information of the new model may be determined based on a product identification code obtained by a sensor.

S4. The process switches a fixture to adapt to a new product model.

In some embodiments of this application, after S4 is performed, S5 is performed.

S5. The process starts to produce a first new-model product.

S6. The process does not switch a fixture.

In some embodiments of this application, after S6 is performed, S7 is performed.

S7. The process continues to produce an original-model product.

It can be understood that switching of all production equipment is performed individually in this application. After the production equipment completes production of the original-model product, the production equipment starts to switch to producing the new-model product without waiting for downstream production equipment to complete subsequent production. This can improve model switching efficiency of the entire battery production line while reducing waste of materials of the in-process parts caused by model switching.

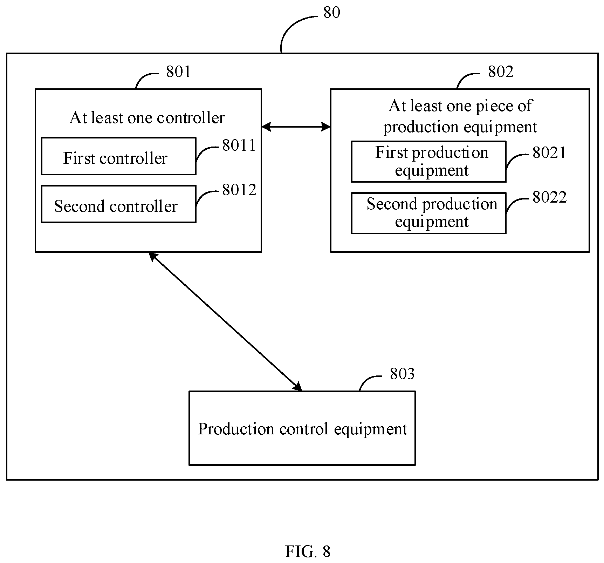

An embodiment of this application provides a battery manufacturing method. The battery manufacturing method is applicable to a battery manufacturing system. FIG. 8 is a schematic diagram of a structure of a battery manufacturing system according to an embodiment of this application. The battery manufacturing system 80 includes at least one controller 801, at least one piece of production equipment 802, and production control equipment 803; the production equipment is an equipment corresponding to any process in a battery group production line;
each controller is connected to each piece of production equipment, where a quantity of controllers and a quantity of production equipment are both consistent with a quantity of processes;
the at least one controller 801 is connected to the production control equipment 803;
the at least one piece of production equipment 802 is configured to produce, by using provided materials, products in respective processes of the battery group based on an original product model delivered by a corresponding controller;
the production control equipment 803 is configured to deliver product information to the controller; and
during product production by production equipment in any process of a battery production line, the at least one controller 801 is configured to control the production equipment in any process to switch to producing a new-model product in a case that the product information meets a product switching condition.

In some embodiments of this application, the at least one piece of production equipment 802 includes first production equipment 8021, which is production equipment in a first process; the at least one controller 801 includes a first controller 8011, which is a controller corresponding to the first process;
the first controller 8011 is connected to the first production equipment 8021; and
the first production equipment 8021 is further configured to obtain a non-duplicate statistical quantity of products produced in the first process during product production in the first process of the battery production line, and transmit the non-duplicate statistical quantity of products to the controller.

In some embodiments of this application, the at least one controller 801 includes a second controller 8012, which is a controller corresponding to a second process; the at least one piece of production equipment 802 includes second production equipment 8022, which is production equipment in the second process;
the second controller 8012 is connected to the second production equipment 8022; and
the second controller 8012 is further configured to obtain a model information code of a product corresponding to the second process during product production in the second process of the battery production line.

In some embodiments of this application, the battery production line includes a battery pack production line and a battery module production line; the first process includes at least one of cell feeding and module insulation testing in the battery module production line, or lower box loading, lower box gluing, automatic module boxing, module tightening, busbar welding, upper cover tightening, air tightness testing, electrical performance testing, and module packaging and unloading in the battery pack production line;
the production control equipment 803 is configured to deliver a work order demand quantity of the first process;
the first controller 8011 is further configured to trigger a product switching request to the production control equipment 803 under a condition that the statistical quantity from the first production equipment 8021 in the first process is consistent with the work order demand quantity;
the production control equipment 803 is further configured to deliver product information of a new model to the first controller 8011 in response to the product switching request; and
the first controller 8011 is further configured to control, based on the product information of the new model, the production equipment in the first process to switch a fixture, so that the first production equipment 8021 in the first process switches to producing the new-model product.

In some embodiments of this application, the first production equipment 8021 includes a first tray, to which an electronic tag is attached; the first tray is used for transmission between the first process and a second process; the battery production line includes the battery module production line and the battery pack production line; the second process includes at least one of cell side adhesive bonding, cell large surface adhesive bonding, cell pre-stacking, and cell pressurization and assembly in the battery module production line;
the first controller 8011 is further configured to write the product information of the new model into the electronic tag of the first tray, where the first tray is a tray that first reaches the first process after the first production equipment 8021 in the first process switches the fixture; and in a case that the first tray reaches the second process downstream of the first process, obtain a model information code of a product during production by second production equipment 8022 in the second process.

In some embodiments of this application, the second production equipment 8022 includes a sensor; the sensor is configured to scan the electronic tag on the tray;
the sensor is configured to read an electronic tag of a current tray that reaches the second production equipment 8022 in the second process, or read the electronic tag of the first tray that reaches the second production equipment 8022 in the second process, to obtain the model information code of the product, and transmit the model information code of the product to the second production equipment 8022; and
the second production equipment 8022 is further configured to obtain the model information code of the product, and transmit the model information code of the product to the second controller 8012.

In some embodiments of this application, under a condition that the model information code of the product is inconsistent with a historical model information code, the second controller 8012 is further configured to control the second production equipment 8022 in the second process to switch a fixture, so that the second process switches to producing the new-model product.

In some embodiments of this application, during product production in the first process of the battery production line, the first production equipment 8021 is configured to perform a station entry/exit check in the first process to determine a quantity of defective products in the first process and a quantity of refurbished products in the first process, and send the quantity of defective products in the first process to the production control equipment 803;
the production control equipment 803 is further configured to determine an updated work order demand quantity based on the quantity of defective products in the first process, a quantity of defective products in a downstream process, the quantity of refurbished products in the first process, a quantity of refurbished products in the downstream process, and the work order demand quantity of the first process, and transmit the updated work order demand quantity to the first controller 8011; and
the first controller 8011 is further configured to determine whether the updated work order demand quantity and the product information meet the product switching condition, and control the first process to switch to producing the new-model product.

In some embodiments of this application, the production control equipment 803 is further configured to receive the quantity of defective products in the downstream process and the quantity of refurbished products in the downstream process that are sent by the controller; and determine the updated work order demand quantity of the first process based on the work order demand quantity of the first process, the quantity of defective products in the first process, the quantity of defective products in the downstream process, the quantity of refurbished products in the first process, and the quantity of refurbished products in the downstream process.

In some embodiments of this application, the production control equipment 803 is further configured to perform a summation operation on the work order demand quantity of the first process, the quantity of defective products in the first process, and the quantity of defective products in the downstream process to obtain an operation result; and perform a subtraction operation on the operation result, the quantity of refurbished products in the first process, and the quantity of refurbished products in the downstream process to determine the updated work order demand quantity of the first process.

It should be understood that, "one embodiment" or "an embodiment" mentioned throughout this specification means that specific features, structures, or characteristics related to the embodiment are included in at least one embodiment of this application. Therefore, "in one embodiment" or "in an embodiment" that appears throughout this specification does not necessarily refer to the same embodiment. In addition, the specific features, structures, or characteristics may be combined in any appropriate manner in one or more embodiments. It should be understood that sequence numbers of the foregoing steps/processes do not mean execution sequences in various embodiments of this application. The execution sequences of the steps/processes should be determined based on functions and internal logic of the steps/processes, but should not be construed as any limitation on the implementation processes in the embodiments of this application. The sequence numbers of the embodiments of this application are for descriptive purposes only and do not represent superiority or inferiority of the embodiments.

It should be noted that in this application, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element.

In the several embodiments provided in this application, it should be understood that the disclosed system, device, and method may be implemented in other manners. The foregoing device embodiments are merely examples. For example, division of the units is merely logical function division and may be other division during actual implementation. For example, a plurality of units or components may be combined or integrated into another system, or some features may be ignored or may not be performed. In addition, the displayed or discussed mutual couplings or direct couplings or communication connections between components may be implemented by using some interfaces. The indirect couplings or communication connections between the devices or units may be implemented in electronic, mechanical, or other forms.

The units described as separate components may or may not be physically separate, and components displayed as units may or may not be physical units. They may be located in one place, or may be distributed in a plurality of network units. Some or all of the units may be selected depending on actual requirements, to achieve the objectives of the solutions in the embodiments. In addition, all the functional units in the embodiments of this application may be integrated into one processing unit, or each of the units may exist alone as one unit, or two or more units are integrated into one unit. The integrated unit may be implemented in a form of hardware, or may be implemented in a form of hardware in addition to a software functional unit.

The foregoing descriptions are only implementations of this application and are not intended to limit the scope of this application. Any variation or replacement readily figured out by persons skilled in the art within the technical scope disclosed in this application shall fall within the scope of this application.

### Industrial Applicability

An embodiment of this application provides a battery manufacturing method. The battery manufacturing method is applied to a battery manufacturing system. The battery manufacturing system includes a controller and production equipment. The method includes: during product production by production equipment in any process of a battery production line, obtaining, by the controller, product information, where the production equipment is an equipment corresponding to any process in a battery group production line; and in a case that the product information meets a product switching condition, controlling, by the controller, the production equipment in any process to switch to producing a new-model product. In the foregoing solution, because the production equipment in any process of the battery production line starts to switch to producing the new-model product in the case that the product information meets the product switching condition, waste of materials of in-process parts caused by model switching can be reduced. In addition, because the production equipment in any process does not wait for downstream production equipment to complete subsequent production, but directly switches to producing the new-model product in the case that the product information meets the product switching condition, a tool switching time of production equipment in each process can be reduced. Therefore, model switching efficiency of the entire battery production line can be improved.

## Claims

1. A battery manufacturing method, applied to a battery manufacturing system, wherein the battery manufacturing system comprises a controller and production equipment, and the method comprises:
during product production by the production equipment in any process of a battery production line, obtaining, by the controller, product information, wherein the production equipment is an equipment corresponding to any process in a battery group production line; and
in a case that the product information meets a product switching condition, controlling, by the controller, the production equipment in any process to switch to producing a new-model product.

2. The method according to claim 1, wherein the obtaining, by the controller, product information during product production by the production equipment in any process of a battery production line comprises:
during product production by the production equipment in a first process of the battery production line, performing, by the production equipment in the first process, a station entry/exit check to obtain a non-duplicate statistical quantity of products produced by the production equipment in the first process; and
transmitting, by the production equipment in the first process, the non-duplicate statistical quantity of products to the controller.

3. The method according to claim 1, wherein the obtaining, by the controller, product information during product production by the production equipment in any process of a battery production line comprises:
during product production by the production equipment in a second process of the battery production line, obtaining, by the controller, a model information code of a product corresponding to the second process.

4. The method according to claim 2, wherein the battery production line comprises a battery pack production line and a battery module production line; the first process comprises at least one of cell feeding and module insulation testing in the battery module production line, lower box loading, lower box gluing, automatic module boxing, module tightening, busbar welding, upper cover tightening, air tightness testing, electrical performance testing, and module packaging and unloading in the battery pack production line; the battery manufacturing system further comprises a production control equipment; and the method further comprises:
delivering, by the production control equipment, a work order demand quantity of the first process; and
the controlling, by the controller, the production equipment in any process to switch to producing a new-model product in a case that the product information meets a product switching condition comprises:
under a condition that the statistical quantity from the production equipment in the first process is consistent with the work order demand quantity, triggering, by the controller, a product switching request to the production control equipment;
delivering, by the production control equipment, product information of a new model to the controller in response to the product switching request; and
controlling, by the controller based on the product information of the new model, the production equipment in the first process to switch a fixture, so that the production equipment in the first process switches to producing the new-model product.

5. The method according to claim 4, wherein the production equipment comprises a first tray, and an electronic tag is attached to the first tray; a second process comprises at least one of cell side adhesive bonding, cell large surface adhesive bonding, cell pre-stacking, and cell pressurization and assembly in the battery module production line; and
the method further comprises:
writing, by the controller, the product information of the new model into the electronic tag of the first tray, wherein the first tray is a tray that first reaches the first process after the production equipment in the first process switches the fixture; and
in a case that the first tray reaches the second process downstream of the first process, obtaining, by the controller, a model information code of a product during production by the production equipment in the second process.

6. The method according to claim 3 or 5, wherein the production equipment further comprises a sensor; and the obtaining, by the controller, a model information code of a product corresponding to the second process or the obtaining, by the controller, a model information code of a product comprises:
reading, by the sensor, an electronic tag of a current tray that reaches the production equipment in the second process, or reading the electronic tag of the first tray that reaches the production equipment in the second process, to obtain the model information code of the product; and
transmitting, by the production equipment in the second process, the model information code of the product to the controller.

7. The method according to claim 3 or 5, wherein the controlling, by the controller, the production equipment in any process to switch to producing a new-model product in a case that the product information meets a product switching condition comprises:
under a condition that the model information code of the product is inconsistent with a historical model information code, controlling, by the controller, the production equipment in the second process to switch a fixture, so that the second process switches to producing the new-model product.

8. The method according to claim 4, wherein the method further comprises:
during product production by the production equipment in the first process of the battery production line, performing, by the production equipment in the first process, a station entry/exit check to determine a quantity of defective products in the first process and a quantity of refurbished products in the first process;
sending the quantity of defective products in the first process to the production control equipment;
determining, by the production control equipment, an updated work order demand quantity based on the quantity of defective products in the first process, a quantity of defective products in a downstream process, the quantity of refurbished products in the first process, a quantity of refurbished products in the downstream process, and the work order demand quantity of the first process;
transmitting, by the production control equipment, the updated work order demand quantity to the controller; and
determining, by the controller, whether the updated work order demand quantity and the product information meet the product switching condition, and controlling the production equipment in the first process to switch to producing the new-model product.

9. The method according to claim 8, wherein the determining, by the production control equipment, an updated work order demand quantity based on the quantity of defective products in the first process, a quantity of defective products in a downstream process, the quantity of refurbished products in the first process, a quantity of refurbished products in the downstream process, and the work order demand quantity of the first process comprises:
receiving, by the production control equipment, the quantity of defective products in the downstream process and the quantity of refurbished products in the downstream process that are sent by the controller; and
determining, by the production control equipment, the updated work order demand quantity of the first process based on the work order demand quantity of the first process, the quantity of defective products in the first process, the quantity of defective products in the downstream process, the quantity of refurbished products in the first process, and the quantity of refurbished products in the downstream process.

10. The method according to claim 9, wherein the determining, by the production control equipment, the updated work order demand quantity of the first process based on the work order demand quantity of the first process, the quantity of defective products in the first process, the quantity of defective products in the downstream process, the quantity of refurbished products in the first process, and the quantity of refurbished products in the downstream process comprises:
performing, by the production control equipment, a summation operation on the work order demand quantity of the first process, the quantity of defective products in the first process, and the quantity of defective products in the downstream process to obtain an operation result; and
performing, by the production control equipment, a subtraction operation on the operation result, the quantity of refurbished products in the first process, and the quantity of refurbished products in the downstream process to determine the updated work order demand quantity of the first process.

11. A battery manufacturing system, wherein the battery manufacturing system comprises at least one controller, at least one piece of production equipment, and a production control equipment; the production equipment is an equipment corresponding to any process in a battery group production line;
each controller is connected to each piece of production equipment, wherein a quantity of controllers and a quantity of production equipment are both consistent with a quantity of processes;
the at least one controller is connected to the production control equipment;
the at least one piece of production equipment is configured to produce, by using provided materials, products in respective processes of the battery group based on an original product model delivered by a corresponding controller;
the production control equipment is configured to deliver product information to the controller; and
during product production by production equipment in any process of a battery production line, the at least one controller is configured to control the production equipment in any process to switch to producing a new-model product in a case that the product information meets a product switching condition.

12. The system according to claim 11, wherein the at least one piece of production equipment comprises a first production equipment, which is the production equipment in a first process; the at least one controller comprises a first controller, which is a controller corresponding to the first process;
the first controller is connected to the first production equipment; and
the first production equipment is further configured to obtain a non-duplicate statistical quantity of products produced in the first process during product production in the first process of the battery production line, and transmit the non-duplicate statistical quantity of products to the controller.

13. The system according to claim 11, wherein the at least one controller comprises a second controller, which is a controller corresponding to a second process; the at least one piece of production equipment comprises a second production equipment, which is the production equipment in the second process;
the second controller is connected to the second production equipment; and
the second controller is further configured to obtain a model information code of a product corresponding to the second process during product production in the second process of the battery production line.

14. The system according to claim 12, wherein the battery production line comprises a battery pack production line and a battery module production line; the first process comprises at least one of cell feeding and module insulation testing in the battery module production line, lower box loading, lower box gluing, automatic module boxing, module tightening, busbar welding, upper cover tightening, air tightness testing, electrical performance testing, and module packaging and unloading in the battery pack production line;
the production control equipment is configured to deliver a work order demand quantity of the first process;
the first controller is further configured to trigger a product switching request to the production control equipment under a condition that the statistical quantity from the first production equipment in the first process is consistent with the work order demand quantity;
the production control equipment is further configured to deliver product information of a new model to the first controller in response to the product switching request; and
the first controller is further configured to control, based on the product information of the new model, the production equipment in the first process to switch a fixture, so that the first production equipment in the first process switches to producing the new-model product.

15. The system according to claim 14, wherein the first production equipment comprises a first tray, to which an electronic tag is attached; the first tray is used for transmission between the first process and a second process; the battery production line comprises the battery module production line and the battery pack production line; the second process comprises at least one of cell side adhesive bonding, cell large surface adhesive bonding, cell pre-stacking, and cell pressurization and assembly in the battery module production line;
the first controller is further configured to write the product information of the new model into the electronic tag of the first tray, wherein the first tray is a tray that first reaches the first process after the first production equipment in the first process switches the fixture; and
in a case that the first tray reaches the second process downstream of the first process, the second controller is further configured to obtain a model information code of a product during production by a second production equipment in the second process.

16. The system according to claim 13 or 15, wherein the second production equipment comprises a sensor; the sensor is configured to scan the electronic tag on the tray;
the sensor is configured to read an electronic tag of a current tray that reaches the second production equipment in the second process, or read the electronic tag of the first tray that reaches the second production equipment in the second process, to obtain the model information code of the product, and transmit the model information code of the product to the second production equipment; and
the second production equipment is further configured to obtain the model information code of the product, and transmit the model information code of the product to the second controller.

17. The system according to claim 13 or 15, wherein
under a condition that the model information code of the product is inconsistent with a historical model information code, the second controller is further configured to control the second production equipment in the second process to switch a fixture, so that the second process switches to producing the new-model product.

18. The system according to claim 14, wherein
during product production in the first process of the battery production line, the first production equipment is configured to perform a station entry/exit check in the first process to determine a quantity of defective products in the first process and a quantity of refurbished products in the first process, and send the quantity of defective products in the first process to the production control equipment;
the production control equipment is further configured to determine an updated work order demand quantity based on the quantity of defective products in the first process, a quantity of defective products in a downstream process, the quantity of refurbished products in the first process, a quantity of refurbished products in the downstream process, and the work order demand quantity of the first process, and transmit the updated work order demand quantity to the first controller; and
the first controller is further configured to determine whether the updated work order demand quantity and the product information meet the product switching condition, and control the first process to switch to producing the new-model product.

19. The system according to claim 18, wherein
the production control equipment is further configured to receive the quantity of defective products in the downstream process and the quantity of refurbished products in the downstream process that are sent by the controller; and determine the updated work order demand quantity of the first process based on the work order demand quantity of the first process, the quantity of defective products in the first process, the quantity of defective products in the downstream process, the quantity of refurbished products in the first process, and the quantity of refurbished products in the downstream process.

20. The system according to claim 19, wherein
the production control equipment is further configured to perform a summation operation on the work order demand quantity of the first process, the quantity of defective products in the first process, and the quantity of defective products in the downstream process to obtain an operation result; and perform a subtraction operation on the operation result, the quantity of refurbished products in the first process, and the quantity of refurbished products in the downstream process to determine the updated work order demand quantity of the first process.
